# EUROPEAN PATENT SPECIFICATION

(11) **EP 2 877 653 B1**
(45) Date of publication and mention of the grant of the patent: **11.10.2017**
(21) Application number: 13733440.5
(22) Date of filing: 27.06.2013
(51) Int. Cl.: E04H 12/02, B29C 44/18, E04C 3/36

(54) **SUPPORT POLES AND METHOD FOR FORMING THE SAME**
STÜTZPFOSTEN UND METHODE ZUR HERSTELLUNG
POTEAUX DE SUPPORT ET PROCÉDÉ DE FABRICATION

(30) Priority: 27.06.2012 GB 201211399
(43) Date of publication of application: 03.06.2015
(73) Proprietor: Lika Miljø AS, 4633 Kristiansand (NO)
(72) Inventor: HAVELAND, Einar Ståle, N- 5141 Fyllingsdalen (NO); LID, Einar, 5913 Eikangervåg (NO)
(74) Representative: Stein, Jan
(86) International application number: PCT/GB2013/051706
(87) International publication number: WO 2014/001811

(56) References cited:
- DE-A1- 1 634 045
- JP-A- 2002 036 211
- NO-A- 20 072 814
- US-A- 4 774 121
- US-A1- 2006 062 959
- US-B1- 6 576 331

## Description

The present invention relates to support poles, particularly (but not exclusively) to utility poles used to support overhead power lines, fibre transmission lines and various other public utilities, such as cables and related equipment (transformers, street lights, etc.).

Utility poles, also known as telephone poles, power poles, hydro poles (e.g. in Canada), telegraph poles or telegraph posts, are conventionally made of solid timber. There have also been proposals for utility poles made of metal, concrete, or composites like fibreglass. Utility poles are typically are used for low and medium voltage power transmission. As the poles are usually spaced relatively close together in a power transmission network, a huge number of poles is needed and they must allow for ease of installation and maintenance.

Conventional timber poles are vulnerable to attack by pests such as termites, rodents and woodpeckers. The lifetime of timber poles is usually extended by treating them with creosote as a pesticide. However such treatment adds to maintenance costs. Moreover the environmental impact of creosote-treated timber has been called into question, especially the potential pollution of ground water. Treated wooden poles can last for 15-20 years before requiring replacement, but in developing countries such as Africa timber poles are typically left untreated and then only last for less than 10 years. A further problem with using timber for utility poles is its contribution to global deforestation.

Alternative pole materials also have a range of drawbacks. Concrete poles require internal steel reinforcement for strength but the steel component is vulnerable to corrosion while the concrete often degrades quite rapidly, especially if poor quality cement is used. The poles are prone to cracking and brittle fracture. Concrete poles are also very heavy for handling and installation purposes. Cranes or other types of lifting equipment are required for installation. The costs involved in producing and installing concrete poles are higher than for timber poles. The lifetime of a concrete utility pole is typically 15-20 years. The cost of fibre-reinforced plastic poles is prohibitive for most purposes. In both cases, materials recycling after use is not easy.

The costs involved in materials and in manufacturing, transporting, installing and maintaining the poles in a power transmission network may be of particular concern in developing countries, for example in Africa and Asia. Furthermore the environmental impact of building the infrastructure in such countries is now a serious factor to be taken into consideration.

NO 20072814 describes a pole made from bamboo canes arranged inside an outer tube of plastic with the gaps between bamboo canes filled with a rigid material. It is disclosed that such poles have a long lifetime and can be recycled. However, an important consideration in the design of utility poles is the strength requirement. By way of comparison, concrete poles can withstand working loads of at least 2.5 kN. A further problem with encapsulating bamboo canes in a rigid material is the risk of slippage between the bamboo canes and the surrounding matrix. US 6,576,331 discloses load-carrying structures made by coating bamboo stems or fibres with a bonding material before being surrounded by a polymer matrix.

There remains a need for support poles that can provide strength as well as environmental benefits.

According to a first aspect of the present invention there is provided a method of forming a support pole, comprising: providing a plurality of stems of bamboo, or similar tubular plant material comprising hollow internodal cavities between nodes, in a longitudinally parallel arrangement, the stems having one or more openings formed in a wall of at least some of the internodal cavities; and injecting a binder material around the stems so as to at least partially fill the open internodal cavities and fix the longitudinally parallel arrangement.

A pole made by such a method has been found to have superior strength properties as compared to a pole made from bamboo canes that are merely held in an outer matrix of surrounding material. The provision of opening(s) in the stem walls, that allow the binder material to access the hollow internodal cavities, ensures that there is a connection between the binder material filling the cavities and the material surrounding the stems. The resultant binding effect ensures that the poles are fixed in place in their longitudinal arrangement and can not slide relative to one another in the longitudinal direction. The Applicant refers to this binding mechanism as "internodal locking". Furthermore, filling the internodal cavities with material makes the bamboo stems resistant to collapse when the pole is supporting external loads. The method is much more efficient than it would be to split the bamboo stems into fibres and use those for reinforcement of a pole.

The bamboo-based poles provide many benefits over conventional timber or concrete utility poles. Bamboo is a very fast growing material and its production does not contribute to deforestation. Bamboo has a unique strength to weight ratio compared to soft wood. Its longitudinal strength is ensured by the nodal structure and augmented by the binder material filling the internodal cavities. Using a binder material to fill in and around the internodal cavities of the bamboo stems also protects the bamboo from pest damage or environmental degradation. Toxic treatment e.g. creosote is not required. The poles are expected to have a lifetime of at least 50 years, i.e. much longer than standard utility poles. The manufacturing process does not generate CO₂ emissions, as does the production of cement; rather bamboo collects CO₂ while growing and the opportunity for local bamboo farming can reduce the carbon footprint involved in production. Furthermore the poles are recyclable after use.

Preferably the method includes a step of forming the one or more openings in a wall of at least some of the internodal cavities, e.g. before placing the stems in their longitudinally parallel arrangement. Forming the one or more openings in a wall of at least some of the internodal cavities of the stems preferably comprises forming at least one opening into every internodal cavity of the stems. The opening(s) may be formed by removing the bamboo material in any suitable way, e.g. cutting, burning, dissolving, etc. The opening(s) are preferably formed in an initial step before the stems are put into their longitudinally parallel arrangement, for ease of access.

The opening(s) may take a number of different forms, for example circular, rectangular, helical or any other shape. However, the shape and size of the opening(s) may be important for various reasons. Firstly, the opening(s) may be designed to ensure that the binder material can effectively fill the internodal cavities and evacuate trapped air, so as to optimise the "internodal locking" effect. Secondly, the larger the area of the opening(s), the greater the contact area between the binder material and the stems and hence the greater the binding strength. In a set of embodiments the method comprises forming a longitudinal opening, such as a slot, in each internodal cavity. The longitudinal opening may be substantially rectangular. Preferably the longitudinal opening extends substantially along most of the length of the internodal cavity, for example extending for over 50%, 60%, 70%, 80% or 90% of the length of the internodal cavity. In preferred embodiments the longitudinal opening may extend over 90-100% of the length of the internodal cavity. The longitudinal opening allows the binder material inside the cavity to connect with the surrounding binder material of the pole, and therefore adds strength and prevents the bamboo stems from moving when force is applied ("internodal locking" principle). Preferably the longitudinal opening is formed so as to extend substantially along the whole length of the internodal cavity. The longitudinal opening may have a length of 20-40 cm. While one longitudinal opening per internodal cavity has been found to be sufficient to allow access for the binder material and to lock the stems in their parallel arrangement, it is envisaged that multiple openings (longitudinal or otherwise) per internodal cavity may be provided. However a single longitudinal opening has been found to achieve effective internodal locking for the stem arrangement with a strong connection between the nodal cavities provided by the binder material.

The Applicant has recognised that for practical manufacturing, the opening(s) may be formed so as to extend substantially along the whole length of each stem. A single opening, for example a longitudinal opening such as a slot, is preferably formed substantially along the length of each bamboo stem. Removing material from both the walls of the internodal cavities and from the nodes eliminates the need to identify the individual hollow sections throughout the length of a stem, which improves the speed of processing. This also ensures that all the hollow cavities are open for injection of binder material. In particular, a single continuous opening can make it easier and quicker for a binder material to access and fill all of the internodal cavities. An even distribution of binder material without trapped pockets of air can be achieved. In some other embodiments, removal of material from the nodes may not be desired and instead it may be chosen to form separate slots in respective internodal cavities.

The step of injecting binder material around the stems may comprise any process suitable for the binder material. The material may be injected into the pole at a single location, or in multiple locations, to make the filling process as quick and/or effective as possible. The binder material is preferably injected in a way that ensures the open internodal cavities are completely filled with substantially no trapped air. This may be achieved by injecting the binder material under pressure, typically at a pressure much higher than atmospheric pressure (1 bar). However a pressurised injection process can increase manufacturing costs. Furthermore, the Applicant has observed that a problem with injecting a binder material around stems of bamboo is that the surface friction properties of bamboo tend to interrupt the flow or expansion of binder material. It can therefore be difficult to effectively fill internodal cavities in bamboo stems.

The Applicant has recognised that a binder material can be injected in a particularly effective manner using a vacuum-assisted process. Preferably the injecting step includes applying a vacuum. This has been found to assist in evacuating air from the internodal cavities and filling them with binder material. As a result the injecting step may be carried out at relatively low pressure, preferably at or only slightly above atmospheric pressure, e.g. around 2-5 bar. Thus in preferred embodiments the injecting step comprises injecting a binder material in the presence of a vacuum.

The vacuum assistance has been found to be particularly helpful when the stems have one or more openings formed in a wall of at least some of the internodal cavities and the internodal cavities are to be filled with the binder material i.e. to provide "internodal locking" to fix the longitudinally parallel arrangement.

The level of vacuum may be chosen depending on the binder material, but good results have been observed when applying a vacuum pressure of 0.5 bar or less, preferably 200-300 mbar or less, further preferably 200-250 mbar or less, and even 200 mbar or below. A vacuum-assisted injection process has been found to fill the internodal cavities in less time than standard injection processes, as well as enabling an effective and consistent filling. The binder material is actually pulled into the cavities instead of relying on the material to flow or expand into the cavities by itself. As a result it is assured that effective internodal locking is achieved. Furthermore the size and shape of the opening(s) may be less important using vacuum-assisted injection. While it may be possible to use smaller opening(s), longitudinal openings are still preferred for the strength benefits discussed above.

Support poles made according to methods of the present invention have been found to deliver high strengths, comparable to those of concrete poles. For example, poles having a diameter in the range 150-250 mm, i.e. around 200 mm, are preferably capable of withstanding a working load of at least 1.0 kN, preferably at least 2.0 kN, further preferably at least 2.5 kN and yet further preferably at least 3.0 kN. Loads of up to 4.0 kN, 5.0 kN and higher may be supported, e.g. depending on the size (diameter and length) of the pole. By way of comparison, a support pole having a diameter of 150-250 mm and made of bamboo stems without openings into the internodal cavities has been found to be less rigid and unable to support loads much above 2.0 kN. A strength increase of more than 20% has been demonstrated.

Advantageously, support poles made according to methods of the present invention have been found to have a very low weight per unit length, for example less than 20 kg/m and even less than 10 kg/m, for example 8 kg/m. By way of comparison, a standard concrete pole typically has a weight per unit length of around 100 kg/m, i.e. five times heavier. Support poles made according to methods of the present invention may therefore provide the same load capacity as standard concrete poles, but they can be more than 80% lighter in weight. Support poles made from stems of bamboo can also be more than 50% lighter than standard timber poles. This makes them easier to handle, reduces transport and installation costs, and reduces the associated carbon footprint.

The binder material can act to isolate the stems from moisture and resist collapse of the bamboo. The binder material may also contribute to the lightweight properties of poles made according to the present invention. The binder material may be any rigid or semi-rigid material that can be injected (e.g. in molten or liquid form). Examples may include plastics, rubber, cement, ceramic, metal foam, etc. A polymeric binder material may be preferred for its low density. However at least some plastics may not bind very well to the bamboo stems. A synthetic polymer foam, such as polyurethane (PUR) foam, has been found to efficiently fill the internodal cavities and bind well to the bamboo stems to fix the longitudinally parallel arrangement. In preferred embodiments the binder material therefore consists of a polyurethane foam. PUR foam has demonstrated good mechanical properties as well as being lightweight, non-toxic and non-flammable. An advantage of using PUR foam (or similar) is that it may be formed by mixing liquid precursors that react in situ to create a foam that expands to fill the internodal cavities. The injecting step may therefore comprise injecting at least two precursor materials that react to form the binder material in situ. For polyurethane foam, this step may comprise injecting polyol and polyisocyanate in liquid form, in the presence of water, to produce an exothermic reaction forming the polyurethane.

A polymeric binder material, in particular an elastomeric material (such as PUR foam) may further be beneficial as it can provide the poles with a unique flexural strength as compared to more rigid materials. The flexural strength allows a pole to withstand high winds and external vibrations. Using a polymeric binder material the poles are capable of absorbing significantly more elastic energy than conventional materials such as steel or concrete. The poles will flex back to their original configuration after loading. Some elastomeric materials, such as natural or synthetic rubber, may make the support poles too flexible. Polyurethane foam has been found to provide resilience in combination with stiffness.

The longitudinally parallel arrangement may take various forms. For example, it may have a substantially rectangular cross-section e.g. for rectangular poles. However it is preferable that the longitudinally parallel arrangement has a substantially circular cross-section e.g. suitable for cylindrical poles. The stems may be arranged to have a constant spacing between them or the spacing may vary. If the stems are thicker at one end than the other then the arrangement may comprise stems side-by-side in alternate longitudinal directions with the thicker parts at opposite ends.

In a preferred set of embodiments the longitudinally parallel arrangement comprises an annular arrangement of the stems, for example in an annulus surrounding a central cylindrical void. Such an annular arrangement has been found to provide sufficient strength but with a reduced material weight.

In at least some embodiments the strength:weight ratio of the poles may be adjusted, e.g. tailored for different applications, by including additional materials in the binder material matrix. It will be understood that the longitudinally parallel arrangement may further include other stems of bamboo that do not have openings formed into their internodal cavities. Alternatively, or in addition, there may be included split rods of bamboo. Furthermore, in some embodiments the method may further comprise providing one or more reinforcing materials for encapsulation by the binder material. Such additional reinforcing material(s) may include natural or synthetic fibres, polymeric materials, metallic materials, ceramics, etc.

Although poles may be provided that have the binder material exposed on the outside, in preferred embodiments the method further comprises encapsulating the pole in an outer tube. The outer tube, which may be formed of e.g. polyethylene, can protect against the ingress of water and humidity, ensure that the pole can withstand rough handling, and protect from UV damage. Furthermore the outer tube may be provided as part of the manufacturing process to guide the arrangement of the stems and/or to help guide injection of the binder material. Such an outer tube may be used to provide a moulding shape for the binder material around the stems. Thus in preferred embodiments the method further comprises the step of providing the longitudinally parallel arrangement of stems inside an outer tube before injecting the binder material. The outer tube can be used to dictate the final outer diameter of the support pole and therefore provide the flexibility of manufacturing a range of different diameter poles. This is an advantage over conventional timber poles, where the diameter may be limited by the size of trees used.

The Applicant has recognised that it can be beneficial to maximise the packing density of bamboo stems in a support pole of a given diameter, i.e. to maximise the ratio of plant material to binder material. This may be achieved in any suitable way, for example fastening the stems together in a longitudinally parallel arrangement before injecting the binder material around the stems. In a preferred set of embodiments, the manufacturing method comprises holding the stems of bamboo in a longitudinally parallel arrangement, e.g. using a jig or fixture, before injecting a binder material around the stems. The use of a jig or fixture provides for accuracy and repeatability in the manufacturing process, so that each longitudinally parallel arrangement is comparable despite natural variations in the bamboo stems. For example, to form a support pole with a circular cross-section the jig or fixture may have an at least partially annular form. The inner diameter of the jog or fixture may match the desired outer diameter of the longitudinally parallel arrangement. Further preferably the method may comprise tightening the jig or fixture around the stems. This may be achieved using an external clamp, or the jig or fixture may itself take the form of a clamp. By tightening the jig or fixture, it can be ensured that the stems are tightly packed in the same longitudinally parallel arrangement with minimal gaps between them. One or more jigs or fixtures may be spaced along the arrangement of stems.

In some embodiments the jig(s) or fixture(s) may remain in place while the stems are surrounded by binder material. However this means that the support pole includes the weight of the jig(s) or fixture(s) and they may also detrimentally affect the flexural properties of the pole. It may therefore be preferable for the method to further comprise fastening the stems in the longitudinally parallel arrangement and removing the one or more jigs or fixtures before injecting a binder material around the stems. The stems may be fastened together by any suitable light weight means. In one example, the stems may be fastened together by nails or pins, although this might risk splitting the stems. In one preferred example, the stems may be fastened together by tying a rope or band around the outside of the longitudinally parallel arrangement. Of course one or more ropes or bands may be spaced along the arrangement of stems. The rope(s) or band(s) may be formed of any suitable material, including metals, plastics or natural materials such as sisal. The material and/or size of the rope(s) or band(s) may be chosen so as not to unduly interfere with the fixing of the binder material and/or the flexural properties of the support pole.

Optionally, once the stems have been fastened in a longitudinally parallel arrangement then the arrangement may be slid inside an outer tube before injecting the binder material, as is mentioned above. The outer diameter of the longitudinally parallel arrangement may be set by the jig(s) or fixture(s) to match the inner diameter of the outer tube. The stability of the longitudinally parallel arrangement can be assured by the rope(s) or band(s) tied around the stems.

The manufacturing steps of positioning the stems in a longitudinally parallel arrangement, tightening the arrangement and fastening the stems before injecting a binder material have been found particularly advantageous for ensuring a good packing density of plant material in a support pole.

Such a method may use one or more jigs or fixtures to hold and/or tighten the stems in the longitudinally parallel arrangement, as is described above. Optionally, the method may further comprise removing the one or more jigs or fixtures before injecting binder material around the stems.

This manufacturing process has been found to be particularly helpful when the stems have one or more openings formed in a wall of at least some of the internodal cavities and the internodal cavities are to be filled with the binder material i.e. to provide "internodal locking" to fix the longitudinally parallel arrangement.

Whenever an outer tube is used to surround the bamboo stems, whether or not they have first been positioned using a jig or fixture, then the outer tube constrains the injection of binder material. The binder material may be injected at one or both ends of the outer tube. However, it has been found preferable to inject the binder material into the tube at multiple locations along its length. This may help the binder material to spread more easily around the stems and into any open internodal cavities. Distribution of the binder material may further be improved by injecting in the presence of a vacuum, as is discussed above. To facilitate injection of the binder material, the method may further comprise closing one or both ends of the tube and injecting the binder material through one or more openings in the tube that are spaced from the ends. The binder material may be injected through a single opening, e.g. spaced approximately halfway between the ends of the tube, or through multiple openings spaced along the tube. The one or more openings may be sealed after injection is complete, so that the tube provides a continuous outer surface for the support pole.

This injection technique has been found to be particularly helpful when the stems have one or more openings formed in a wall of at least some of the internodal cavities and the internodal cavities are to be filled with the binder material i.e. to provide "internodal locking" to fix the longitudinally parallel arrangement.

It is an advantage of the present invention that the method can be used to produce large lengths of support pole which may then be cut into poles of a desired length. The method may therefore comprise the additional step of cutting the support pole into two or more desired lengths.

According to a further aspect of the present invention there is provided a support pole comprising a plurality of stems of bamboo, or similar tubular plant material comprising hollow internodal cavities between nodes, in a longitudinally parallel arrangement, the stems having an opening formed in a wall of at least some of the internodal cavities, and binder material around the stems and at least partially filling the open internodal cavities.

Various preferred features of such a pole have already been described hereinabove and may equally be applied to this further aspect of the invention.

The support pole may be made to have any suitable size. Standard utility poles typically have a diameter around 200 mm, but poles made according to embodiments of the present invention can be scaled up or down to suit different applications.

Although it is envisaged that the invention may find most use in making support poles comprising a plurality of stems of bamboo (or similar), for some applications it may be desirable to form a pole, e.g. a narrow pole, with just a single stem or a few stems of bamboo encapsulated by binder material. The present invention therefore extends to a method of forming a support pole, comprising: providing at least one stem of bamboo, or similar tubular plant material comprising hollow internodal cavities between nodes, the stem(s) having one or more openings formed in a wall of at least some of the internodal cavities; and injecting a binder material around the stem(s) so as to at least partially fill the open internodal cavities and encapsulate the stem(s). Furthermore the present invention extends to a support pole comprising at least one stem of bamboo, or similar tubular plant material comprising hollow internodal cavities between nodes, the stem(s) having an opening formed in a wall of at least some of the internodal cavities, and binder material around the stem(s) and at least partially filling the open internodal cavities.

Bamboo is a tubular plant material (naturally hollow inside its internodal cavities) that belongs to the grass family Poaceae. There are more than 1,000 different bamboo species and nearly a hundred different kinds. Of these, Tonkin cane (Arundinaria amabilis or Pseudosasa amabilis) may be preferred. However it is an advantage of the present invention that support poles can be made from locally available materials, with a reduced carbon footprint as compared to conventional poles, and so the choice of bamboo species may be based on local availability.

Poles made according to the present invention may find use not only as utility poles (e.g. power or telegraph poles), but also as fence poles, poles used in growing fruit and berries, and as naval poles for docks, marinas, quays, etc.

Some preferred embodiments of the present invention will now be described, by way of example only, and with reference to the accompanying drawings, in which:
Figures 1a-1d show various views of a pole according to a prior art arrangement;
Figures 2a-2c and Figs. 3a-3c show various views of a pole according to a first embodiment of the present invention;
Figures 4a-4d show various views of a pole according to a second embodiment of the present invention;
Figures 5 and 6 illustrate the internodal locking principle;
Figures 7a and 7b shows a pole according to a third embodiment of the present invention;
Figures 8a-8c show various views of a pole according to a fourth embodiment of the present invention;
Figures 9a-9g illustrate a method of manufacturing a support pole according to embodiments of the present invention; and
Figures 10a and 10b each provide a comparison of the flexural strength properties of the poles of Figs. 1 and 4.

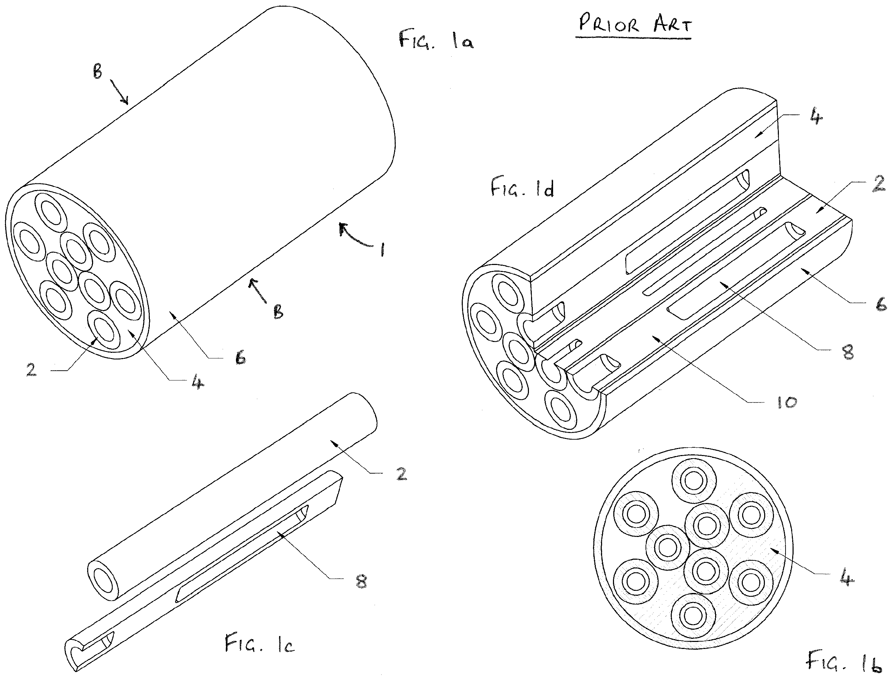

In the prior art arrangement seen in Figs. 1a-1d, a number of bamboo stems 2 are encapsulated by a rigid material 4 inside an outer tube 6 to form a pole 1. From the perspective view of Fig. 1 a and the cross-sectional view of Fig. 1b (section B-B) it can already be seen that the rigid material 4 is only surrounds the outside of the stems 2. Fig. 1c shows a close-up of part of a bamboo stem 2 with a cross-section to show one of the naturally hollow "internodal" cavities 8. The cross-sectional view of the pole 1 seen in Fig. 1d illustrates that rigid material 4 does not fill any of the hollow cavities 8 between the natural nodes 10 of each bamboo stem 2. As will be explained in more detail below, a problem with such a pole 1 is that the bamboo stems 2 are not reliably fixed in position by the rigid material 4, especially when high loads are applied, and the stems 2 may slide relative to one another in the longitudinal direction of the pole 1.

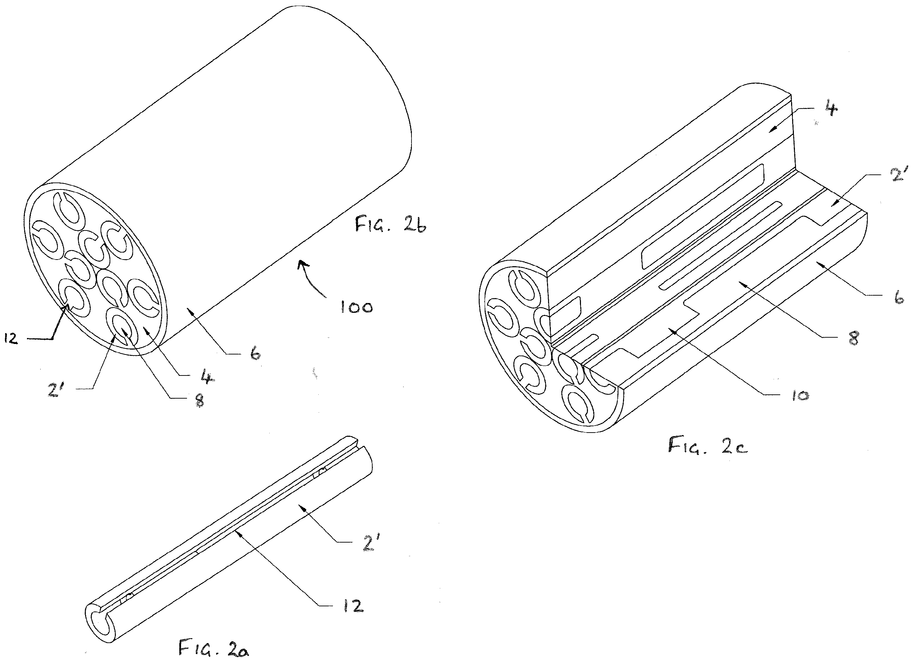

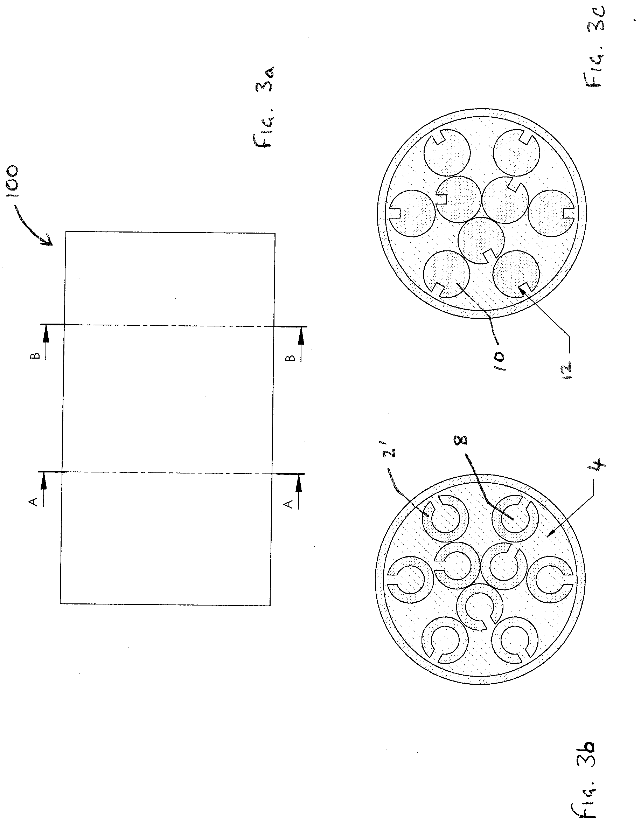

In a first embodiment of a pole 100 seen in Figs. 2a-2c, a number of bamboo stems 2' are provided in a longitudinal arrangement inside an outer tube 6. As is seen from Fig. 2a, each stem 2' is provided with a longitudinal slot 12 that extends continuously along the length of the stem 2'. From the perspective view of Fig. 2b and the partial cross-sectional view of Fig. 2c it can be seen that the rigid material 4 is able to access the internodal cavities 8 through the slots 12 and fill the cavities 8 of each stem 2'. As the rigid material 4 inside the cavities 8 is connected with the rigid material 4 surrounding the stems 2', there is an effective "internodal locking" along the length of each stem 2'. From the side view of the pole 100 seen in Fig. 3a, and the two different cross-sections provided by Fig. 3b (section A-A) and Fig. 3b (section B-B), it can be appreciated that with a continuous slot 12 the contact surface area between the rigid material 4 and the bamboo stems 2' can be maximised. The rigid material 4 completely fills each of the internodal cavities 8.

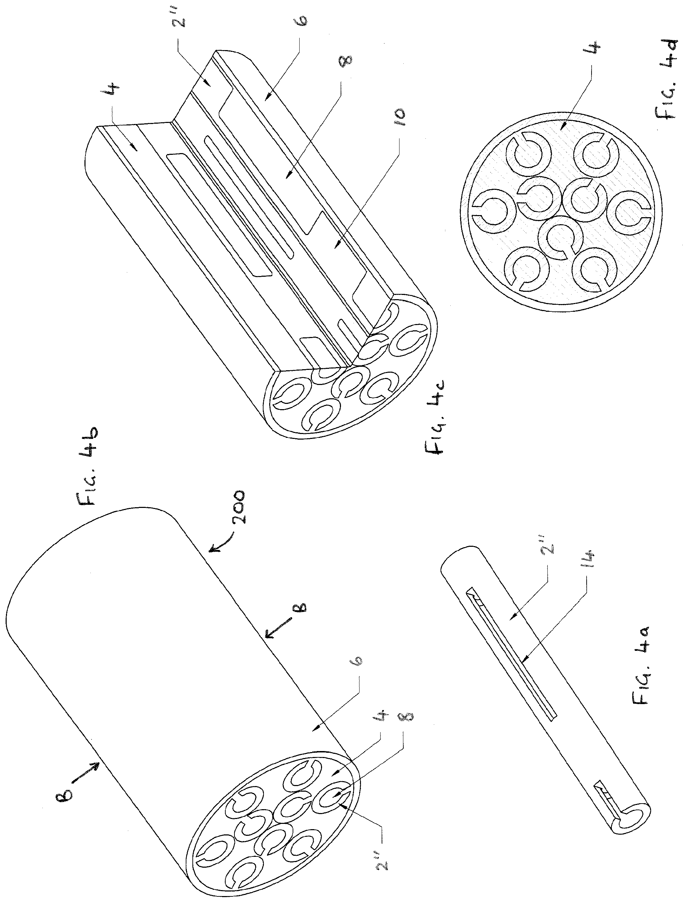

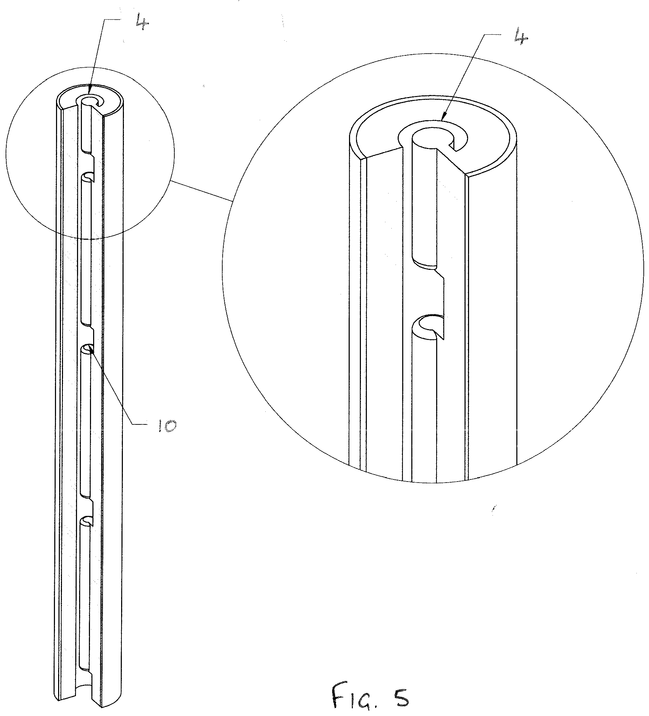

In a second embodiment of a pole 200 seen in Figs. 4a-4d, a number of bamboo stems 2" are provided in a longitudinal arrangement inside an outer tube 6. As is seen from Fig. 4a, each stem 2" is provided with a plurality of longitudinal slots 14 that extend along the length of each internodal cavity 8. From the perspective view of Fig. 4b and the partial cross-sectional view of Fig. 4c it can be seen that the rigid material 4 is able to access each of the internodal cavities 8 through the respective slots 14 and fill the cavities 8 of each stem 2". Fig. 4d shows that in a cross-section of the pole 200 (section B-B) the stems 2" are not only surrounded by rigid material 4 but also filled with the rigid material 4. Fig. 5 is a schematic illustration of the rigid material 4 surrounding a stem 2" such as described above but without the stem 2" being present. The close-up detail is at a scale of 1:2. It is clearly seen how the rigid material 4 fills the cavities between the nodes 10 so as to take up a large volume and surface area. The rigid material 4 provides a form of "internodal locking".

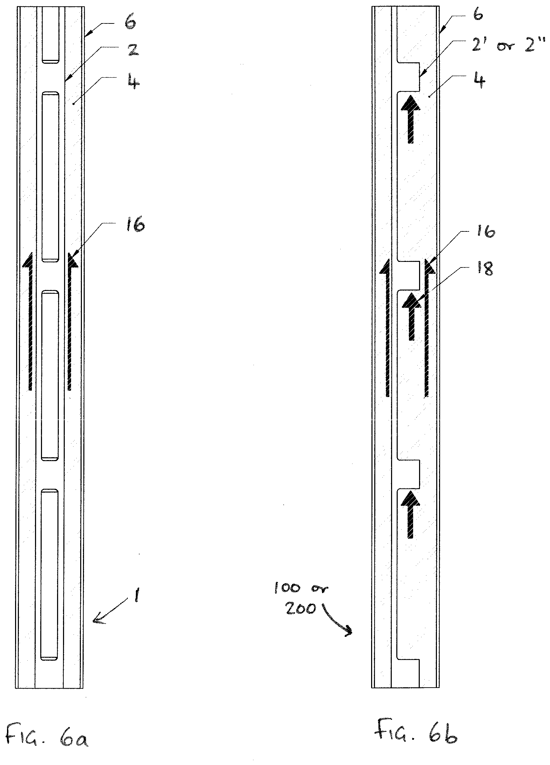

Fig. 6a shows the forces on a pole 1 with a cross-section of rigid material 4 around a stem 2 with hollow cavities 8 (as seen in Figs. 1a-1d). Fig. 6b shows the forces on a pole 100 or 200 with a cross-section of rigid material 4 around a stem 2' or 2" with the material 4 filling the cavities 8. Although the outer tube 6 is shown as containing a single stem 2; 2', 2", of course a plurality of stems 2; 2', 2" may instead be arranged to be longitudinally parallel inside the tube 6. When a load is applied to the poles, it can be seen from Fig. 6a that the pole 1 that has hollow cavities in the bamboo stems 2 is vulnerable to shear forces 16 generated between the outer ring of rigid material 4 and the sides of the stem 2. The stem 2 is not fully prevented from longitudinal movement as it is difficult for the rigid material 4 to adhere to the sides of the stem 2. On the other hand, from Fig. 6b it can be seen that the pressure 18 of the rigid material 4 filling the cavities acts under the applied load to resist the shear forces 16 so that the stems 2' or 2" can not move longitudinally inside the tube 6. The pole 100 or 200 takes advantage of the natural nodal structure of bamboo stem 2', 2" so that each stem 2', 2" is effectively locked in its longitudinal position using the "internodal locking" principle. The rigid material also makes the stem 2' or 2" resistant to collapse and increases the bending strength of the pole 100 or 200.

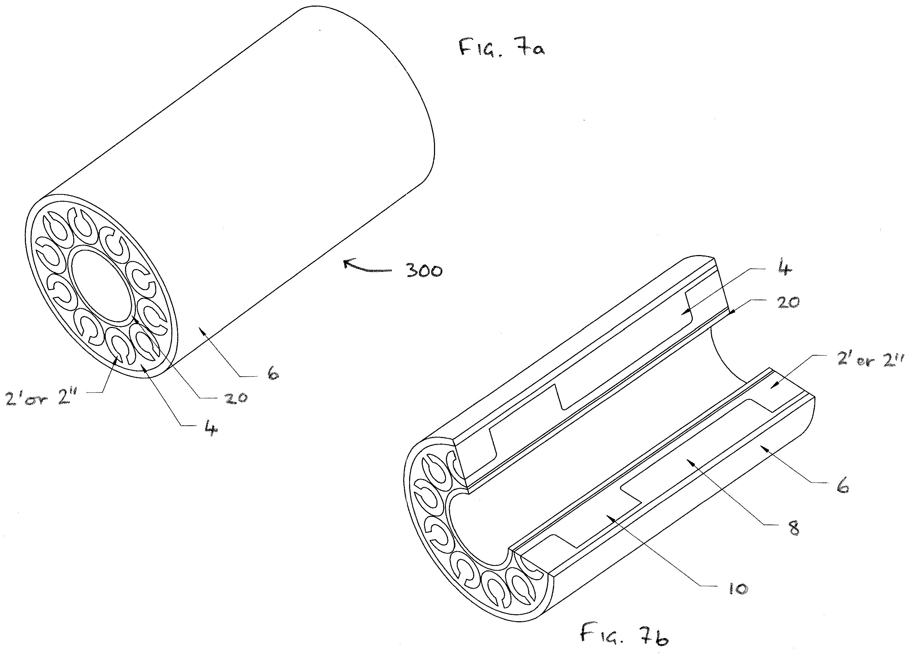

A further embodiment of a pole 300 is shown in Figs. 7a and 7b. Here a number of bamboo stems 2' or 2" are arranged longitudinally inside an outer tube 6 but in an annular arrangement surrounding an inner tube 20. As before, the stems 2' or 2" are provided with one or more slots so that rigid material 4 can fill the cavities 8 between the nodes 10. Such an annular arrangement may be chosen to reduce the weight of the pole 300, while still benefitting from a strength improvement provided by the interlocked bamboo stems 2' or 2". The inner tube 20 may be filled with air.

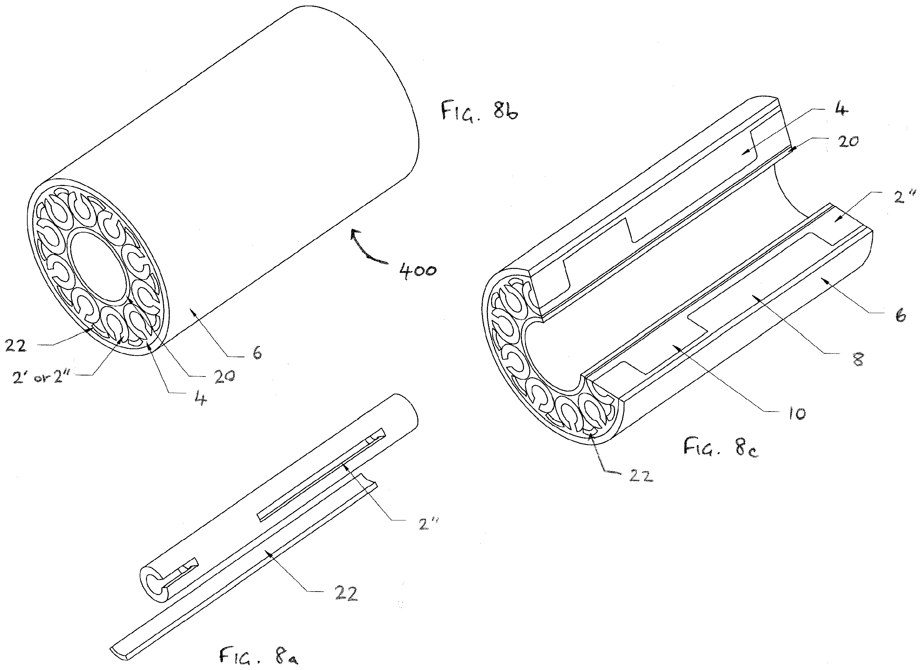

A further embodiment of a pole 400 is shown in Figs. 8a-8c. Here a number of bamboo stems 2" (or stems 2' with a continuous slot e.g. as seen in Fig. 2) are arranged longitudinally inside an outer tube 6 in an annular arrangement surrounding an inner tube 20. The stems 2" are provided with slots to give access to the internodal cavities 8 so that rigid material 4 can fill the cavities 8 between the nodes 10. Furthermore, some rods 22 of bamboo, or other reinforcing material, are also placed in parallel with the stems 2". The rods 22 may be obtaining by splitting bamboo stems. The rigid material 4 encapsulates both the rods 22 and the stems 2" with an increased bamboo surface area. Such an arrangement may be chosen to increase the strength of the pole 400.

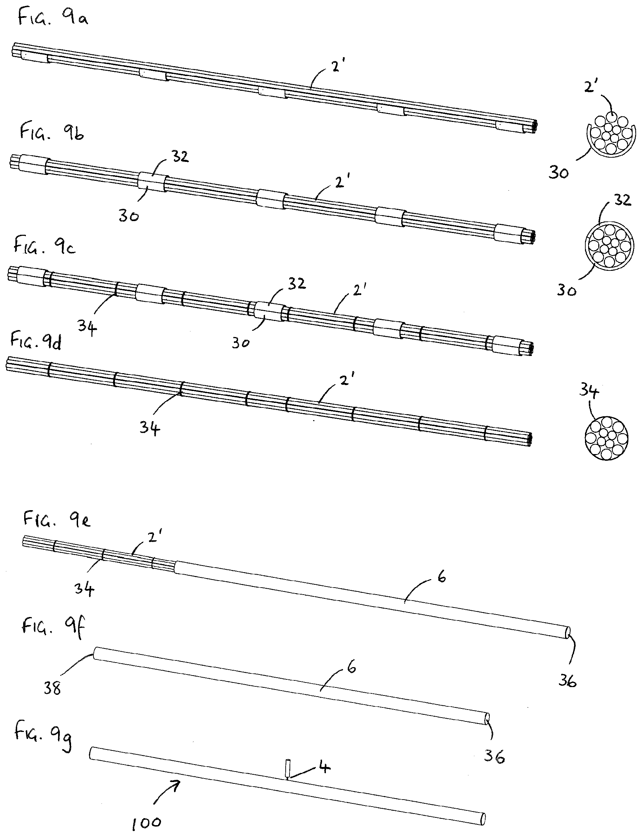

Figs. 9a-9g illustrate a method of manufacturing a support pole 100. The bamboo stems 2' are manually positioned into a jig 30 (Fig. 9a) with a predefined inner diameter chosen according to the desired diameter of the pole 100. The method aims to position the stems 2' so that the pole 100 is filled with as much bamboo material as possible. After inserting the bamboo stems 2', a top clamp 32 is closed over the jig 30 and tightened (Fig. 9b). Then tight, thin steel bands 34 are applied around the bamboo stems 2' and locked in order to keep the outer diameter of the bundle (Fig. 9c). The bundle of bamboo stems is then released from the jig 30 and clamp 32, with the steel bands 34 assuring the stability of the bamboo bundle (Fig. 9d). The bundle of stems 2' is then inserted into a tube 6 with a lid 36 at one end (Fig. 9e). After inserting the bamboo stems 2', the tube 6 is closed by another lid 38 at the other end (Fig. 9f), and polyurethane (PUR) foam 4 is injected into the tube 6 through one or more drilled holes (Fig. 9g). The hole(s) are sealed after filling, and the pole 100 is left for curing before shipment.

Although described as a rigid material, the binder material that is injected into the outer tube 6 to surround and fill the bamboo stems 2', 2" may be semi-rigid, resilient or partially flexible. PUR foam may be used as the rigid material. The outer tube 6 and/or inner tube 20 may be made from any suitable material, for example a plastics material. A thermoplastics material such as polyethylene may be used for the tube(s). Furthermore, although not seen in the Figures, the pole may have a plastics cover or welding at its ends to prevent the ingress of moisture.

It will be appreciated that various changes or modifications may be made to the embodiments described above in accordance with the appended claims. For example, the pole does not need to have a circular cross-section and could instead be made in a rectangular or other form. The number of bamboo stems and their longitudinal arrangement may be varied according to the size of the stems and the diameter of the pole. More than one annulus of bamboo (and optionally other reinforcing material) may be arranged around an inner tube. Other reinforcing materials that might be embedded in the rigid material inside the pole could include natural or synthetic fibres, metal rods, wires, grids, etc. and/or plastic or ceramic fibres, rods, particles, etc.

Poles made according to embodiments of the present invention may be used to support loads in a variety of applications, including utility poles (e.g. power or telegraph poles), and also finding use as fence poles, poles used in growing fruit and berries, and as naval poles for docks, marinas, quays, etc.

### Example 1

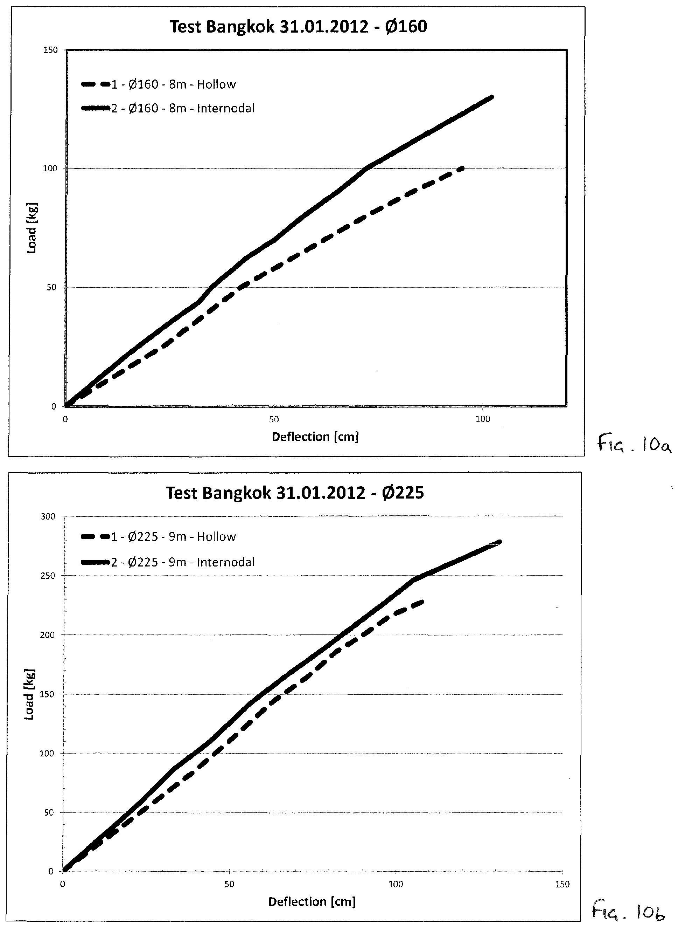

Several tests have been performed in order to compare the performance of a support pole made according to an embodiment of the present invention, as described with reference to Figs. 4a-4d, with a pole containing hollow stems of bamboo (i.e. as seen in Fig. 1). Similar properties are expected for poles according to other embodiments. The poles were made using PUR foam as the rigid binder material. The poles were tested for bending strength using a standard cantilever test method (for example as outlined by ASTM D747 or similar). Other appropriate test methods may include ASTM D1036, ISO 15206, KS 1933 (concrete poles) and KS 516 (wood poles).
A first series of tests compared two poles of length 8 m and diameter 160 mm and the results are shown in Fig. 10a.
A second series of tests compared two poles of length 9 m and diameter 225 mm and the results are shown in Fig. 10b.
The test results show that the support poles having internodal cavities of the bamboo stems filled with the binder material, i.e. benefitting from the "internodal locking" effect, have an increased stiffness (i.e. less deflection and more rigid) and a higher strength (i.e. will take higher loads before collapse). A 20% increase in strength has been observed compares to the poles containing hollow stems of bamboo encapsulated in the same binder material. Other tests have been performed with poles having different diameters to those cited above and similar results have been observed.

### Example 2

The following table compares various support poles of different lengths and diameters, made according to embodiments of the present invention (Poles 1 to 5), with a standard concrete pole.

| **Pole** | **Length (m)** | **Diameter (mm)** | **Working load (kN)** | **Ultimate load (kN)** | **Depth in ground (m)** | **Weight per length (kg/m)** | **Total weight (kg)** |
|---|---|---|---|---|---|---|---|
| Pole 1 | 7 | 160 | 0.90 | 1.35 | 1.5 | 8 | 56 |
| Pole 2 | 8 | 180 | 1.00 | 1.50 | 1.5 | 11 | 88 |
| Pole 3 | 8 | 200 | 2.00 | 3.00 | 1.5 | 15 | 120 |
| Pole 4 | 9 | 225 | 2.25 | 3.38 | 1.5 | 18 | 162 |
| Pole 5 | 10 | 225 | 2.50 | 3.75 | 1.8 | 18 | 180 |
| Concrete | 10 | 190 | 2.50 | 5.00 | 1.8 | 100 | 1000 |

### Example 2

The following table compares various support poles of different lengths and diameters, made according to embodiments of the present invention (Poles 1 to 5), with a standard concrete pole.

| **Pole** | **Length (m)** | **Diameter (mm)** | **Working load (kN)** | **Ultimate load (kN)** | **Depth in ground (m)** | **Weight per length (kg/m)** | **Total weight (kg)** |
|---|---|---|---|---|---|---|---|
| Pole 1 | 7 | 160 | 0.90 | 1.35 | 1.5 | 8 | 56 |
| Pole 2 | 8 | 180 | 1.00 | 1.50 | 1.5 | 11 | 88 |
| Pole 3 | 8 | 200 | 2.00 | 3.00 | 1.5 | 15 | 120 |
| Pole 4 | 9 | 225 | 2.25 | 3.38 | 1.5 | 18 | 162 |
| Pole 5 | 10 | 225 | 2.50 | 3.75 | 1.8 | 18 | 180 |
| Concrete | 10 | 190 | 2.50 | 5.00 | 1.8 | 100 | 1000 |

## Claims

1. A method of forming a support pole (100; 200; 300; 400), comprising:
providing a plurality of stems (2'; 2") of bamboo, or similar tubular plant material comprising hollow internodal cavities (8) between nodes (10), in a longitudinally parallel arrangement;
**characterised by**: the stems (2'; 2") having one or more openings (12; 14) formed in a wall of at least some of the internodal cavities (8); and
injecting a binder material (4) around the stems (2'; 2") so as to at least partially fill the open internodal cavities (8) and fix the longitudinally parallel arrangement.

2. A method according to claim 1, further comprising forming at least one opening in a wall of at least some of the internodal cavities (8), preferably forming at least one opening (12; 14) in a wall of every internodal cavity (8) of the stems (2'; 2").

3. A method according to any preceding claim, further comprising forming at least one opening (12) that extends substantially along the whole length of each stem (2").

4. A method according to any preceding claim, further comprising forming at least one longitudinal opening (14) in a wall of each internodal cavity (8), wherein preferably the at least one longitudinal opening (14) is formed so as to extend for over 50%, 60%, 70%, 80% or 90% of the length of an internodal cavity (8), and wherein further preferably the at least one longitudinal opening (14) is formed so as to extend substantially along the whole length of an internodal cavity (8).

5. A method according to any preceding claim, comprising injecting a polyurethane foam as the binder material (4).

6. A method according to any preceding claim, further comprising providing additional stem or stems of bamboo, or similar plant material, that do not have openings formed into their internodal cavities and/or providing split rod or rods of bamboo (22) or other reinforcing material or materials for encapsulation by the binder material (4).

7. A method according to any preceding claim, further comprising providing an annular arrangement of the stems, wherein preferably the annular arrangement surrounds a central void.

8. A method according to any preceding claim, further comprising encapsulating the pole in an outer tube (6).

9. A method according to any preceding claim, further comprising providing the longitudinally parallel arrangement of stems (2'; 2") inside an outer tube (6) before injecting the binder material (4), and preferably further comprising closing one or both ends of the outer tube (6) and injecting the binder material (4) through one or more openings in the tube (6) that are spaced from its ends.

10. A support pole (100; 200; 300; 400) comprising a plurality of stems (2', 2") of bamboo, or similar tubular plant material comprising hollow internodal cavities (8) between nodes, in a longitudinally parallel arrangement, **characterised by**: the stems (2'; 2") having an opening (12; 14) formed in a wall of at least some of the internodal cavities, and binder material (4) around the stems (2'; 2") and at least partially filling the open internodal cavities (8).

11. A support pole according to claim 10, wherein the binder material (4) comprises polyurethane foam.

12. A support pole according to any of claims 10-11, wherein the longitudinally parallel arrangement further comprises additional stem or stems of bamboo, or similar plant material, that do not have openings formed into their internodal cavities, and/or further comprising split rod or rods of bamboo (22) or other reinforcing material or materials encapsulated by the binder material (4).

13. A support pole according to any of claims 10-12, further comprising an outer tube (6).

14. A support pole according to any of claims 10-13, wherein the pole has a weight per unit length less than 10 kg/m.

15. A support pole according to any of claims 10-14, consisting of a utility pole.

## Patentansprüche

1. Verfahren zur Herstellung eines Stützpfostens (100; 200; 300; 400), umfassend:
Bereitstellen einer Vielzahl von Stangen (2'; 2") aus Bambus oder einem ähnlichen röhrenförmigen Pflanzenmaterial, das hohle Internodien-Hohlräume (8) zwischen Knoten (10) umfasst, in einer längsparallelen Anordnung;
**dadurch gekennzeichnet, dass:** die Stangen (2'; 2") eine oder mehrere Öffnungen (12; 14) aufweisen, die in einer Wand von zumindest einigen der Internodien-Hohlräumen (8) geformt sind; und
Spritzen eines Bindemittel-Materials (4) um die Stangen (2'; 2") herum zum zumindest teilweise Füllen der offenen Internodien-Hohlräume (8) und Fixieren der längsparallelen Anordnung.

2. Verfahren nach Anspruch 1, ferner umfassend ein Formen von mindestens einer Öffnung in einer Wand von zumindest einigen der Internodien-Hohlräume (8), vorzugsweise Formen von mindestens einer Öffnung (12; 14) in einer Wand von jedem Internodien-Hohlraum (8) der Stangen (2'; 2").

3. Verfahren nach einem der vorhergehenden Ansprüche, das ferner ein Formen von wenigstens einer Öffnung (12) umfasst, die im Wesentlichen die Gesamtlänge jeder Stange (2") entlang verläuft.

4. Verfahren nach einem der vorhergehenden Ansprüche, das ferner ein Formen von mindestens einer Längsöffnung (14) in einer Wand von jedem Internodien-Hohlraum (8) umfasst, wobei vorzugsweise die mindestens eine Längsöffnung (14) so geformt ist, dass sie sich über 50 %, 60 %, 70 %, 80 % oder 90 % der Länge eines Internodien-Hohlraums (8) erstreckt, und wobei ferner vorzugsweise die mindestens eine Längsöffnung (14) so geformt ist, dass sie im Wesentlichen die Gesamtlänge eines Internodien-Hohlraums (8) entlang verläuft.

5. Verfahren nach einem der vorhergehenden Ansprüche, umfassend ein Spritzen eines Polyurethanschaums als Bindemittel-Material (4).

6. Verfahren nach einem der vorhergehenden Ansprüche, ferner umfassend ein Bereitstellen einer zusätzlichen Stange oder zusätzlicher Stangen aus Bambus oder einem ähnlichen Pflanzenmaterial, die keine in ihren Internodien-Hohlräumen geformten Öffnungen aufweisen, und/oder ein Bereitstellen eines gespaltenen Bambusstabs oder gespaltener Bambusstäbe (22) oder eines anderen Verstärkungsmaterials oder anderer Verstärkungsmaterialien zum Vergießen durch das Bindemittel-Material (4).

7. Verfahren nach einem der vorhergehenden Ansprüche, ferner umfassend ein Bereitstellen einer ringförmigen Anordnung der Stangen, wobei vorzugsweise die ringförmige Anordnung einen mittigen Hohlraum umgibt.

8. Verfahren nach einem der vorhergehenden Ansprüche, ferner umfassend ein Vergießen des Pfostens in einer Außenröhre (6).

9. Verfahren nach einem der vorhergehenden Ansprüche, das ferner ein Anordnen der längsparallelen Anordnung von Stangen (2'; 2") in einer Außenröhre (6) vor dem Spritzen des Bindemittel-Materials (4) umfasst, und vorzugsweise ferner ein Verschließen von einem oder beiden Enden der Außenröhre (6) und Spritzen des Bindemittel-Materials (4) durch eine oder mehrere Öffnungen in der Röhre (6) umfasst, die einen Abstand zu ihren Enden aufweisen.

10. Stützpfosten (100; 200; 300; 400), der eine Vielzahl von Stangen (2'; 2") aus Bambus oder einem ähnlichen röhrenförmigen Pflanzenmaterial, das hohle Internodien-Hohlräume (8) zwischen Knoten umfasst, in einer längsparallelen Anordnung umfasst, **dadurch gekennzeichnet, dass:** die Stangen (2'; 2") eine Öffnung (12; 14) aufweisen, die in einer Wand von zumindest einigen der Internodien-Hohlräume geformt ist, und Bindemittel-Material (4) um die Stangen (2'; 2") herum, das die offenen Internodien-Hohlräume (8) zumindest teilweise füllt.

11. Stützpfosten nach Anspruch 10, wobei das Bindemittel-Material (4) Polyurethanschaum umfasst.

12. Stützpfosten nach einem der Ansprüche 10 bis 11, wobei die längsparallele Anordnung ferner eine zusätzliche Stange oder zusätzlichen Stangen aus Bambus oder einem ähnlichen Pflanzenmaterial umfasst, die keine in ihren Internodien-Hohlräumen geformten Öffnungen aufweisen, und/oder ferner einen gespaltenen Bambusstab oder gespaltene Bambusstäbe (22) oder ein anderes Verstärkungsmaterial oder andere Verstärkungsmaterialien umfasst, die mit dem Bindemittel-Material (4) vergossen sind.

13. Stützpfosten nach einem der Ansprüche 10 bis 12, der ferner eine Außenröhre (6) umfasst.

14. Stützpfosten nach einem der Ansprüche 10 bis 13, wobei das Gewicht des Pfostens pro Einheitslänge geringer als 10 kg/m ist.

15. Stützpfosten nach einem der Ansprüche 10 bis 14, der aus einem Strommast, Telefonmast oder einem ähnlichen Mast besteht.

## Revendications

1. Procédé de fabrication d'un poteau de support (100 ; 200 ; 300 ; 400), comprenant :
la mise à disposition d'une pluralité de tiges (2' ; 2") de bambou, ou d'un matériau végétal tubulaire similaire, comportant des cavités internodales (8) creuses entre des noeuds (10), selon un agencement longitudinalement parallèle ;
**caractérisé en ce que :** les tiges (2' ; 2") présentent une ou plusieurs ouvertures (12 ; 14) réalisées dans une paroi d'au moins certaines des cavités internodales (8) ; et
l'injection d'un matériau agglomérant (4) autour des tiges (2' ; 2") de manière à remplir au moins partiellement les cavités internodales (8) ouvertes et à solidariser l'agencement longitudinalement parallèle.

2. Procédé selon la revendication 1, comprenant en outre la réalisation d'au moins une ouverture dans une paroi d'au moins certaines des cavités internodales (8), et de préférence la réalisation d'au moins une ouverture (12 ; 14) dans une paroi de chacune des cavités internodales (8) des tiges (2' ; 2").

3. Procédé selon l'une quelconque des revendications précédentes, comprenant en outre la réalisation d'au moins une ouverture (12) qui s'étend sensiblement sur la longueur totale de chacune des tiges (2").

4. Procédé selon l'une quelconque des revendications précédentes, comprenant en outre la réalisation d'au moins une ouverture longitudinale (14) dans une paroi de chacune des cavités internodales (8), et dans lequel, de préférence, l'au moins une ouverture longitudinale (14) est réalisée de manière à s'étendre sur 50 %, 60 %, 70 %, 80 % ou 90 % de la longueur d'une cavité internodale (8), et dans lequel, de manière encore plus préférentielle, l'au moins une ouverture longitudinale (14) est réalisée de manière à s'étendre sensiblement sur la longueur totale d'une cavité internodale (8).

5. Procédé selon l'une quelconque des revendications précédentes, comprenant l'injection d'une mousse de polyuréthane en tant que matériau agglomérant (4).

6. Procédé selon l'une quelconque des revendications précédentes, comprenant en outre la mise à disposition d'une ou plusieurs tiges supplémentaires de bambou, ou d'un matériau végétal similaire, dépourvues de toute ouverture dans leurs cavités internodales et/ou la mise à disposition d'une ou plusieurs baguettes issues du fendage du bambou (22), ou d'un ou plusieurs autres matériaux de renfort, en vue de leur encapsulation dans le matériau agglomérant (4).

7. Procédé selon l'une quelconque des revendications précédentes, comprenant en outre la mise à disposition d'un agencement annulaire desdites tiges, ledit agencement annulaire entourant de préférence un espace vide central.

8. Procédé selon l'une quelconque des revendications précédentes, comprenant en outre l'encapsulation du poteau dans un tube extérieur (6).

9. Procédé selon l'une quelconque des revendications précédentes, comprenant en outre la mise à disposition de l'agencement longitudinalement parallèle de tiges (2' ; 2") à l'intérieur d'un tube extérieur (6) avant l'injection du matériau agglomérant (4), et comprenant en outre de préférence l'obturation de l'une ou des deux extrémités du tube extérieur (6) et l'injection du matériau agglomérant (4) par une ou plusieurs ouvertures du tube (6) espacées de ses extrémités.

10. Poteau de support (100 ; 200 ; 300 ; 400) comprenant une pluralité de tiges (2' ; 2") de bambou, ou d'un matériau végétal tubulaire similaire, comportant des cavités internodales (8) creuses entre des noeuds, selon un agencement longitudinalement parallèle, **caractérisé en ce que :** les tiges (2' ; 2") présentent une ouverture (12 ; 14) réalisée dans une paroi d'au moins certaines des cavités internodales ; et un matériau agglomérant (4) autour des tiges (2' ; 2") et remplissant au moins partiellement les cavités internodales (8) ouvertes.

11. Poteau de support selon la revendication 10, dans lequel le matériau agglomérant (4) comprend de la mousse de polyuréthane.

12. Poteau de support selon l'une quelconque des revendications 10 et 11, dans lequel l'agencement longitudinalement parallèle comprend en outre une ou plusieurs tiges supplémentaires de bambou, ou d'un matériau végétal similaire, dépourvues de toute ouverture dans leurs cavités internodales et/ou comprend en outre une ou plusieurs baguettes issues du fendage du bambou (22), ou réalisées dans un ou plusieurs autres matériaux de renfort, encapsulées dans le matériau agglomérant (4).

13. Poteau de support selon l'une quelconque des revendications 10 à 12, comprenant en outre un tube extérieur (6).

14. Poteau de support selon l'une quelconque des revendications 10 à 13, dans lequel le poteau présente un poids par unité de longueur ne dépassant pas 10 kg/m.

15. Poteau de support selon l'une quelconque des revendications 10 à 14, consistant en un poteau électrique, télégraphique ou similaire.
